Europäisches Patentamt

European Patent Office

Office européen des brevets

(11) Publication number: **0 350 070**
**A2**

## EUROPEAN PATENT APPLICATION

(21) Application number: 89112487.7

(51) Int. Cl.⁴: **C04B 35/00**

(22) Date of filing: 07.07.89

(30) Priority: 08.07.88 JP 170585/88

(43) Date of publication of application:
**10.01.90 Bulletin 90/02**

(84) Designated Contracting States:
**BE CH DE FR GB IT LI NL SE**

(71) Applicant: **IDEMITSU PETROCHEMICAL CO. LTD.**
**1-1, Marunouchi 3-chome Chiyoda-ku Tokyo(JP)**

(72) Inventor: **Okamoto, Kouhei Idemitsu Petrochemical Co. Ltd.**
**1-1, Shingu-cho**
**Tokuyama-shi Yamaguchi-ken(JP)**

(74) Representative: **Patentanwälte TER MEER - MÜLLER - STEINMEISTER**
**Mauerkircherstrasse 45**
**D-8000 München 80(DE)**

(54) Ceramics binder.

(57) A ceramics binder contains an organic binder as a major component and cyclododecane as an auxiliary component. The binder does not cause any blocking when formulated with a raw material for ceramics to form a body and, furthermore, does not get out of shape when molding the body into a shaped material.

EP 0 350 070 A2

Xerox Copy Centre

## CERAMICS BINDER

## BACKGROUND OF THE INVENTION

### 1. Field of the Invention

The present invention relates to a ceramics binder and, more particularly, to a ceramics binder which causes no blocking in preparing a body by admixing a raw ceramics material with a binder and which can provide a molded article without getting out of shape during molding the body to molded articles.

### 2. Description of Related Art

Heretofore, as a method of manufacturing ceramics products, there is included a process for preparing a body having a plasticity by admixing a powdery raw ceramics material with a binder, molding the body and then baking the resulting molded articles.

As conventional binders, there have been extensively used ones containing, as a main component, a thermoplastic resin such as an atactic polypropylene, a copolymer of ethylene with vinyl acetate or the like and, as an auxiliary component, an organic compound such as naphthalene, anthracene, camphor, phenanthrene or the like.

However, such conventional binders may often cause blocking during preparation for a body and a molded article of the body may get out of shape. Even if the body is treated for cleaning or degreasing, a considerably large amount of the binder may remain and cracks or voids may be caused to occur on a surface of the molded article leading to a poor outlook. When a body formulated with such binder is manufactured, for example, by injection molding, it is hard to carry out the molding under relatively mild conditions because a high molding pressure is required for injection molding and a decomposition of the binder is caused if a molding temperature is elevated in order to reduce the high molding pressure. These difficulties result in a poor molded article and require a long time for cleaning or degreasing so that a manufacturing efficiency is impaired.

Thus attempts have been made to improve those disadvantages inherent in the conventional binders.

For example, Japanese Patent Publication (laid-open) No.3,064/1987 discloses an attempt using adamantane, trimethylene norbornane or the like as an auxiliary component. This process may produce shaped ceramics products, for example, by injection molding under relatively mild conditions, shorten a cleaning time, and reduce an amount of the binder. In this respect, this process presents the advantage, however, it has been found that it poses the drawbacks that blocking is likely to occur in preparing a body obtained by admixing a ceramics raw material with the ceramics binder. Thus ceramics binders with improved performance have been demanded for a long time.

## SUMMARY OF THE INVENTION

Therefore, the present invention has the object to provide a ceramics binder which causes no blocking in preparing a body, which does not get out of shape in molding the body into shaped articles, which contains a small amount of residues of the binder remained in the body to be reduced to a lower level by cleaning or degreasing, which blocks cracking, voids or swelling from occurring when molding into shaped articles, and which permits a ready injection molding to thereby improve a manufacturing efficiency.

In order to solve the problems as have been described hereinabove and, furthermore, to achieve the object, the present invention consists of a ceramics binder characterized by containing a cyclododecane.

The ceramics binder according to the present invention contains an organic binder as a major component and cyclododecane as an auxiliary component. The ceramics binder is conveniently formulated into a body and then subjected to injection molding.

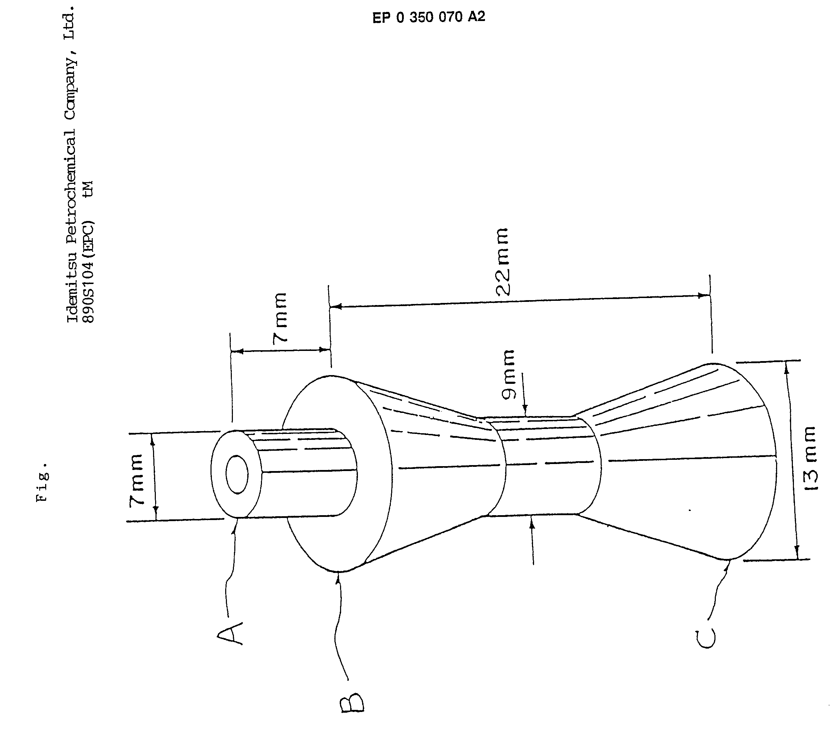

## BRIEF DESCRIPTION OF THE DRAWING

FIGURE is a perspective view showing a shaped material in the form of a top molded in one of examples of the present invention.

DETAILED DESCRIPTION OF THE PREFERRED EMBODIMENTS

The ceramics binder according to the present invention is prepared from the organic binder as a major component and cyclododecane as an auxiliary component.

The organic binder to be used as a major component for the ceramics binder according to the present invention is not restricted to a particular one and may include, for example, polyethylene, atactic polypropylene, polybutene, polystyrene, ethylene-vinyl acetate copolymer, polybutyl methacrylate, cellulose acetate, acrylic resin, polyvinyl alcohol, carboxymethyl cellulose, glucose, methyl cellulose, ethyl cellulose, acetyl cellulose, starch, dextrin, gelatin, molasses, pulp waste, peptone, polyvinyl ether, wax, liquid paraffin, heavy oil, machine oil, phenol resin, and ethyl silicate. Polyethylene, atactic polypropylene, polystyrene, ethylene-vinyl acetate copolymer, polybutyl methacrylate, cellulose acetate, wax and the like are preferred when the ceramics binder of the present invention is used for a body for injection molding.

The ceramics binder according to the present invention is characterized in that the cyclododecane is contained as an auxiliary component. The cyclododecane to be used therefor is not restricted to any particular one and it has a melting point of 61°C, a boiling point of 240°C, and $d^{20}_4$ of 0.861- The cyclododecane obtainable by whichever processes may be conveniently used. The cyclododecane may be prepared generally by trimerizing butadiene to form cyclododeca-1,5,9-triene followed by hydrogenation. For trimerization of butadiene, a catalyst is usually used and such may include, for example, a Ziegler catalyst, e.g., $TiCl_4$ and $Et_2AlCl$, Ni(O) complex, e.g., bis($\pi$ -allyl)nickel complex or a chrome complex. Industrially applicable is a catalyst system such as Al $(C_2H_5)Cl_2$-Al$(C_2H_5)Cl$. For hydrogenation of cyclododeca-1,5,9-triene, a catalyst such as Ni catalyst may be employed.

Rates of the major component and the auxiliary component may vary with kinds of ceramics raw materials. A rate of the major component may be in the range usually from 0.5 parts to 50 parts by weight, preferably from 5 parts to 30 parts by weight, based on 100 parts by weight of the ceramics raw material, and a rate of the auxiliary component may be in the range usually from 0.5 parts to 15 parts by weight, preferably from 2 parts to 8 parts by weight, based on 100 parts by weight of the ceramics raw material.

The ceramics binder according to the present invention may additionally contain an additive such as a plasticizer or a lubricant. The plasticizer may include, for example, diethyl phthalate, dibutyl phthalate, dioctyl phthalate or an aliphatic acid ester. The lubricant may include, for example, aluminium stearate, magnesium stearate, diglycolstearic acid, bread crumbs or mineral oil.

The ceramics binder comprising the major component and the auxiliary component is then formulated with the ceramics raw material to form a body.

The ceramics raw material to be used with the ceramics binder may include, for example, a non-plastic raw material such as silica, feldspar, porcelain stone, lithium ore, silimanite, alumina, zirconia, silicon carbonate or silicon nitride or a plastic raw material such as kaolin, plastic clay, vermiculite clay or fire clay. The ceramics raw material are subjected to processing such as pulverization, wet admixing, screening and removal of impurities, prior to admixture with the ceramics binder, like manufacturing shaped ceramics products in a usual manner.

Formulation of the ceramics raw material with the ceramics binder may be generally carried out by kneading at temperatures ranging from 80°C to 150°C, preferably from 100°C to 120°C for 0.5 to 3 hours, preferably from 0.5 to 1 hour. The kneading may be effected with a kneader which provides a shear force while heating, such as ball mill, blast mill, heating kneader or Kokneader.

Procedures of formulation may be restricted to no particular one. They may preferably involve admixing the main component with the auxiliary component to yield a ceramics binder and then admixing the ceramics binder with the ceramics raw material although the ceramics raw material may be admixed with the main and auxiliary components simultaneously or one after another.

It is preferred that the ceramics raw material is admixed with the ceramics binder as long as the ceramics binder can be dispersed in the body to a favorable extent. Particularly, this procedure does not cause any blocking during preparation for the body and permits a kneading of the ceramics binder with the raw material in a more uniform manner.

The resulting body is then molded into a given shaped form by any conventional ceramics molding methods such as injection molding, soft mud process, semi-soft mud process, plastic pressure molding, jiggering, roller machine process, extrusion molding, hydrostatic molding/ rubber press method, tamping and high temperature pressure molding. Most preferred is injection molding because the injection molding of the body in which the ceramics binder of the present invention is formulated can be effected in favorable and smooth manner under low molding pressures and cleaning or degreasing performance after injection molding can be improved.

The body obtained by heating and kneading the ceramics raw material in admixture with the ceramics binder may be then formulated into given shaped products such as pellets or powders as molding material by granulation of the body by means of rolls, pelletizing by means of pelletizers, pulverization by means of cold grinding with a kneader or by means of cold extrusion into sheet by rolls. The molding material thus prepared is then subjected to injection molding of plunger type, or screw line type, yielding a primary shaped article. The injection molding may be effected at temperatures ranging from 80°C to 170°C under pressures ranging from 300 to 1,500 kg/cm².

The primary shaped article is then subjected to cleaning or degreasing process to remove the ceramics binder contained therein. This process may be carried out by heating it at temperatures in the range from 20°C to 450°C for 15 to 40 hours. In the cleaning or degreasing process, it is to be noted that the ceramics binder according to the present invention can be removed in a time period extremely shorter and its amount of the binder left in the primary shaped article is considerably smaller than conventional ceramics binders.

After the cleaning or degreasing process, the primary shaped article is then fired or baked to yield ceramics shaped products.

As have been described, it is to be noted herein that the ceramics binder according to the present invention using cyclododecane as the auxiliary component does not get out of shape during molding the body and can permit a ready provision of shaped articles and products having accurate dimensions.

The present invention will be further described by way of examples in comparison with comparative examples.

Examples 1 - 6:

As ceramics raw material was used alumina, zirconia, silicon carbide or silicon nitride having physical characteristics as shown in Table 2 below.

As a major component was used ethylene-vinyl acetate copolymer (EVA) ("UE633"; Toyo Soda K.K.), polybutyl methacrylate (PVA)("CB-1"; Sanyo Kasei Kogyo K.K.), polystyrene (PS)("CR-3500"; Dainippon Ink K.K.), polyethylene (PE)("Sumikasen G808"; Sumitomo Chemical Industries, Co., Ltd.) or wax ("NB-793"; Chukyo Yushi (K.K.). As an auxiliary component was used cyclododecane.

In each of Examples 1 to 6, the ceramics raw material was formulated with the major and auxiliary components in a manner as shown in Table 1 below and the mixture was kneaded at a temperature of 100 ± 10°C and under kneading torque of 150 kg/cm² for 30 minutes with a blast mill. The body prepared by kneading was then measured for blocking. Results are shown in Table 1 below. As is apparent from Table 1 below, it has been found that no blocking is caused whatsoever and the body in each Example is in a state in which the ingredients are uniformly dispersed.

The body thus prepared was then pulverized into powder which, in turn, was subjected to injection molding. The injection molding was effected to yield a shaped article in the form of a top as shown in FIGURE, using an injection molding machine of a vertical plunger type (Yamashiro Seiki K.K.) under molding conditions as shown in Table 1 below.

As shown in FIGURE, the shaped article may be in the form of a drum having a lower surface and an upper surface with a small-diameter rod thereon. Visual observation was made on edge portion A of the small-diameter rod projecting from the upper surface, edge portion B of the upper surface, and edge portion C of the lower surface for a deformation of shape. As is apparent from Table 1 below, it has been found that the shaped article prepared in each of Examples did not cause any deformation of shape.

The shaped article was then subjected to cleaning or degreasing under conditions as shown in Table 1 below. Thereafter, it was fired or baked with a furnace oven and the temperature was raised to 1,620°C at the rate of 100°C per hour, yielding a ceramics product.

As is apparent from the results for Examples 1 to 6 as shown in Table 1 below, it is found that no blocking has been caused when the body was prepared by kneading the raw material of ceramics with the binder, a shaped article prepared from the body did not get out of shape, a time required for cleaning or degreasing were shorter, and the resulting ceramics products were favorable ones free of cracks, voids and swelling.

4

Comparative Examples 1 - 4:

The raw materials used in Comparative Examples were the same as used in Examples 1 to 6. The major components were the same as used in Examples 1 to 6 except atactic polypropylene (APP) ("polyOne"; Mitsubishi Yuka K.K.) and adamantane or endo-trimethylene norbornane ("Endo-TMN") was used as the auxiliary component.

The raw material was admixed with the major and auxiliary components under conditions as shown in Table 1 below using the same apparatus as used in Examples 1 to 6 and the mixture was kneaded into the body which, in turn, was formed to a shaped article in the form of a top. The shaped article was then subjected to cleaning or degreasing and baked yielding a ceramics product.

As shown in Table 1 below, it has been found in Comparative Examples 1 to 4 that blocking has been caused during preparation for the body, shapes of the molded articles were deformed on the edge portions A, B, and C.

It has been further apparent that the resulting ceramics products were poorer in quality than any one obtained in Examples 1 to 6.

It is thus to be noted that the ceramics binder according to the present invention comprising mainly the organic binder as the major component and cyclododecane as the auxiliary component causes no blocking during preparation for the body by kneading the mixture of the binder with the ceramics raw material and permits a uniform kneading. It is further noted that it provides a shaped article which does not get out of shape and that it serves as shortening a time period for cleaning or degreasing. The resulting shaped article can yield a ceramics product free of cracks, voids and swelling and the product possesses a high mechanical strength and a high accuracy in shape dimensions, leading to an excellent surfacial outlook.

It is to be understood that the present invention may be embodied in other specific forms without departing from the spirit and scope thereof. The present embodiments are therefore to be considered in all respects as illustrative and not restrictive, the scope of the invention being indicated by the appended claims, and all the changes, modifications and variations which come within the meaning and range of equivalency of the claims are therefore intended to be encompassed within the spirit and scope of the invention.

TABLE 1

| | | FORMULATION | | | | | | MOLDING | | CLEANING | | BLOCKING | DEFORMING |
| | | CERAMICS RAW MAT. | | BINDERS | | | | TEMP. (°C) | PRES. (kg/cm2) | TEMP. (°C) | TIME (hr) | | |
| | | KIND | AMOUNT (part by wt) | MAJOR CORP. | | AUXILIARY | | | | | | | |
| | | | | KIND *3 | AMOUNT (part by wt) | KIND *3 | AMOUNT (part by wt) | | | | | | |
|---|---|---|---|---|---|---|---|---|---|---|---|---|---|
| EX. | 1 | Alumina | 100 | EVA | | 8 | Cyclododecane | 7 | 150 | 660 | 20 → 420 | 24 | NONE | NONE |
| EX. | 2 | - do - | - do - | EVA PBA | (5) (5) | 10 | - do - | 5 | 120 | - do - | - do - | - do - | - do - | - do - |
| EX. | 3 | - do - | - do - | EVA PS | (4.5) (4.5) | 9 | - do - | 6 | 130 | - do - | - do - | - do - | - do - | - do - |
| EX. | 4 | Zirconia | - do - | PE PBA | (4.5) (4.5) | 9 | - do - | 5 | 140 | - do - | - do - | 30 | - do - | - do - |
| EX. | 5 | Silicon carbide | - do - | PS PBA | (7.5) (7.5) | 15 | - do - | 4 | 150 | - do - | 20 → 500 (in argon) | 35 | - do - | - do - |
| EX. | 6 | Silicon nitride | - do - | EVA WAX | (8) (3) | 16 | - do - | 5 | - do - | - do - | 20 → 500 (in nitrogen) | 36 | - do - | - do - |
| CO.EX. | 1 | Alumina | - do - | PE PS | (6.5) (6.5) | 13 | AD | 3 | 180 | 680 | 20 → 400 | 68 | YES | *1 |
| CO.EX. | 2 | Zilconia | - do - | APP PE | (3) (8) | 16 | Endo-TMN | 4 | 160 | 800 | - do - | 67 | - do - | *1 |
| CO.EX. | 3 | Silicon | - do - | PE | (8) | - | AD (1.2) | 4 | 170 | 900 | 20 → | 70 | - do - | * |

EP 0 350 070 A2

| | | | | | | | | | | | | | | |
|---|---|---|---|---|---|---|---|---|---|---|---|---|---|---|
| | | carbide | do - | EVA | (8) | do - | Endo-TMN (2.8) | | | | 400 (in argon) | | - | 2 |
| CO.EX. | 4 | Silicon nitride | - do - | APP EVA | (8) (8) | - do - | AD | 5 | 160 | - do - | 20 → 400 (in nitrogen) | 80 | - do - | *1 1 |

(*) EVA : Etylene-vinyl acetate copolymer ("UE 633"); Toyo Soda K.K.)

PBA : Polybutyl methacrylate ("CB-1"; Sanyo Kasei Kogyo K.K.)

PS : Polystyrene ("CR-3500"; Dainippon Ink K.K.)

PE : Polyethylene ("Sumikasen G808"; Sumitomo Chemical Ind.)

WAX : "NB-793"; Chukyo Yushi K.K.

APP : Atactic polypropylene ("Polyone"; Mitsubishi Yuka K.K.)

AD : Adamantane

Endo-TMN : Trimethylene norbornane

*1 : Deforming shapes of edge portions A, Band C in FIGURE caused.
*2 : Deforming shapes of edge portions Band B and C in FIGURE caused.
*3 : Figures in parentheses ( ) denote rates of formulation.

TABLE 2

|  | Specific surfafce Area (m²/g) | Average Particle size |
|---|---|---|
| Alumina | 7 | 0.5 μm |
| Zirconia | 13 | 200 Å |
| Silicon carbide | 15 | 0.3 μm |
| Silicon nitride | 10 | 0.2 μm |

**Claims**

1. A ceramics binder comprising cyclododecane.

2. A ceramics binder as claimed in claim 1, wherein an organic binder is contained as a manor component and cyclododecane is contained as an auxiliary component.

3. A ceramics binder as claimed in claim 1 or 2, wherein said binder is formulated in a body for use in injection molding.

4. A ceramics binder as claimed in claim 2, wherein said organic binder is polyethylene, polypropylene, polystyrene, ethylene-vinyl acetate copolymer or polybutyl methacrylate.

5. A ceramics binder as claimed in claim 2, wherein said major component is in the range from 0.5 parts to 50 parts by weight and said auxiliary component is in the range from 0.5 parts to 15 parts by weight with respect to 100 parts by weight of a ceramics raw material.

Idemitsu Petrochemical Company, Ltd.
890S104(EPC)   tM

EP 0 350 070 A2

7mm

A

7mm

B

9mm

22mm

C

13mm